Europäisches Patentamt

European Patent Office

Office européen des brevets

(19)

(11) Numéro de publication : **0 107 560**
**B1**

(12) FASCICULE DE BREVET EUROPÉEN

(45) Date de publication du fascicule du brevet :
10.09.86

(51) Int. Cl.⁴ : **F 02 P   5/04**, F 02 P   7/06

(21) Numéro de dépôt : **83401955.6**

(22) Date de dépôt : **07.10.83**

(54) Dispositif électronique de commande d'allumage d'un moteur à combustion interne notamment pour véhicules automobiles.

(30) Priorité : **14.10.82 FR 8217192**

(43) Date de publication de la demande :
**02.05.84 Bulletin 84/18**

(45) Mention de la délivrance du brevet :
**10.09.86 Bulletin 86/37**

(84) Etats contractants désignés :
**DE GB IT**

(56) Documents cités :
**US-A- 3 184 640**
**US-A- 3 779 218**

(73) Titulaire : **DUCELLIER & Cie**
**Echat 950**
**F-94024 Créteil Cedex (FR)**

(72) Inventeur : **Hamelin, Gilbert**
**33 Avenue Henri Barbusse**
**F-95670 Marly Laville (FR)**

(74) Mandataire : **Habert, Roger**
**VALEO Service Propriété Industrielle 21 rue Auguste Blanqui**
**F-93406 Saint-Ouen (FR)**

Jouve, 18, rue St-Denis, 75001 Paris, France

## Description

L'invention concerne un dispositif électronique d'allumage d'un moteur à combustion interne, notamment pour véhicules automobiles dispositif comportant un générateur magnétique constitué d'un rotor et d'un enroulement induit délivrant des signaux alternatifs appliqués, par l'intermédiaire de résistances, aux entrées d'un circuit de commande d'un interrupteur électronique commandant le passage d'un courant dans l'enroulement primaire d'une bobine d'allumage pour délivrer une étincelle, d'énergie constante, à des bougies d'allumage reliées consécutivement à l'enroulement secondaire de la bobine d'allumage par un distributeur.

Un inconvénient bien connu des générateurs magnétiques utilisés dans les dispositifs d'allumage selon l'invention, générateurs du genre tel celui décrit, par exemple dans la demande FR-A-2 393 949 est qu'ils provoquent, en fonction de l'accroissement de leur vitesse de rotation et de leur réaction d'induit qui en résulte, un décalage croissant du point d'allumage dans le sens d'un retard à l'allumage.

Ce retard, à l'allumage, est facilement compensable par une adaptation des caractéristiques du mécanisme d'avance centrifuge dans le domaine des vitesses, de rotation du générateur magnétique, supérieures à 400 tours/minute, la vitesse de 400 tours/minute correspondant généralement au point de réglage de l'allumage sur le véhicule automobile.

Par contre dans le domaine des vitesses inférieures à 400 tours/minute, domaine dans lequel le mécanisme d'avance centrifuge est inopérant, et particulièrement pendant la phase de démarrage, du moteur à combustion interne, le point d'allumage se décale en conséquence dans le sens d'une avance à l'allumage du fait, qu'aux basses vitesses de démarrage la réaction d'induit du générateur magnétique est pratiquement nulle, alors que la valeur de cette réaction à 400 tours/minute était comprise dans le point de réglage.

Ce décalage dans le sens d'une avance, à l'allumage, présente l'inconvénient que, pendant la phase de démarrage du moteur à combustion interne, il n'est pas souhaitable que la force des explosions provoquée en avance par rapport au point mort haut des cylindres, vienne s'opposer à la force produite par le moteur électrique de démarrage du moteur.

La présente invention a pour but de remédier à cet inconvénient et concerne à cet effet un dispositif électronique d'allumage, d'un moteur à combustion interne, comportant un générateur magnétique constitué d'un rotor et d'un enroulement induit délivrant des signaux alternatifs appliqués, par l'intermédiaire de résistances aux entrées d'un circuit de commande d'un interrupteur électronique commandant le passage d'un courant dans l'enroulement primaire d'une bobine d'allumage pour délivrer une étincelle, d'énergie constante, à des bougies d'allumage reliées consécutivement à l'enroulement secondaire de la bobine par un distributeur, dispositif caractérisé en ce qu'un condensateur est connecté entre l'une des extrémités d'une des résistances et l'une des entrées du circuit de commande de l'interrupteur électronique de façon que la variation d'impédance du condensateur compense l'avance du point d'allumage provoquée par le générateur magnétique dans le domaine de ses basses vitesses de rotation.

L'avantage obtenu par cette invention est que l'on facilite ainsi le démarrage des moteurs dont les dispositifs d'allumage comportent un générateur magnétique.

La description qui va suivre en regard des dessins annexés fera mieux comprendre comment l'invention peut être réalisée.

La figure 1 est une représentation schématique du dispositif objet de l'invention.

La figure 2 représente la variation de la réaction d'induit d'un générateur magnétique.

La figure 3 représente le décalage du point d'allumage en fonction de la vitesse de rotation d'un générateur magnétique, décalage provoqué par la réaction d'induit.

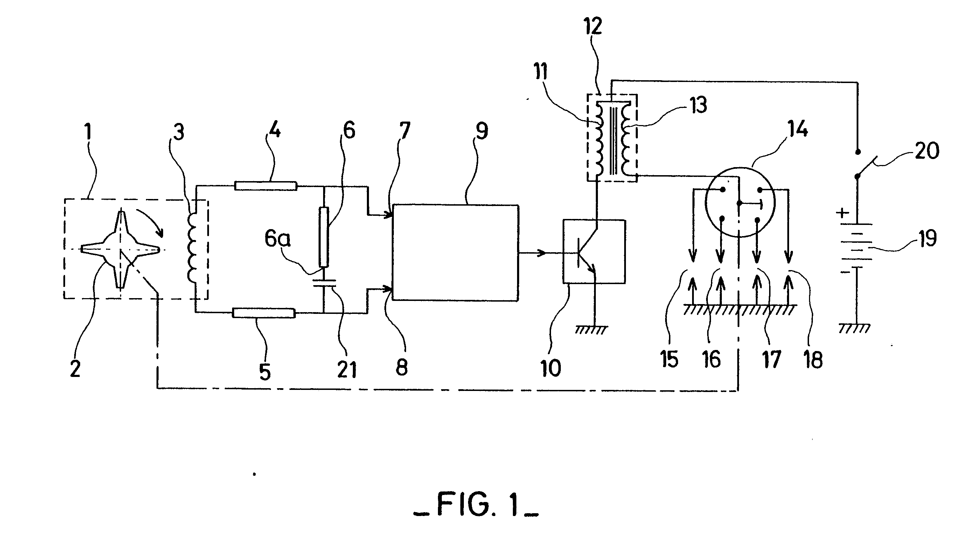

Dans un mode de réalisation, plus particulièrement adapté à l'allumage d'un moteur à quatre cylindres, le dispositif d'allumage représenté schématiquement par la figure 1, comporte un générateur magnétique 1, du genre tel que celui décrit, par exemple dans la demande FR-A-2 393 949.

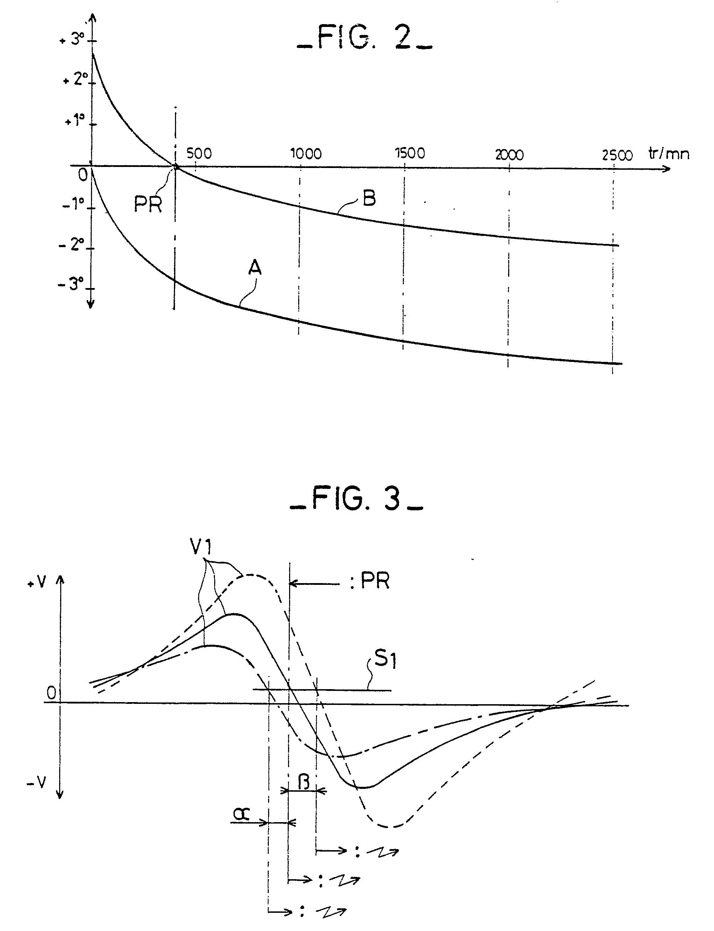

Ce générateur constitué d'un rotor 2 et d'un enroulement induit 3, délivre des signaux alternatifs V1, figure 3, dont l'amplitude croît en fonction de l'accroissement de la vitesse de rotation du générateur.

Ces signaux alternatifs V1 sont appliqués par l'intermédiaire de résistances 4, 5, 6 aux entrées 7, 8 d'un circuit 9 de commande d'un interrupteur électronique 10 commandant le passage d'un courant dans l'enroulement primaire 11 d'une bobine d'allumage 12, de manière à délivrer une étincelle, d'énergie constante, à des bougies d'allumage 15, 16, 17, 18 reliées consécutivement à l'enroulement secondaire 13 de la bobine d'allumage 12, par un distributeur 14, dans lequel est logé le générateur magnétique 1, lié à un mécanisme d'avance centrifuge, pour l'obtention d'un décalage du point d'allumage en fonction des variations de la vitesse de rotation du moteur à combustion interne, lequel entraîne le distributeur 14. La bobine d'allumage 12 est alimentée par une batterie 19, par l'intermédiaire d'une clé de contact 20.

Le déclenchement du point d'allumage s'effectue pour un seuil S1 du circuit 9 et pour une valeur positive des signaux alternatifs V1, figure 3, délivrés par le générateur magnétique 1.

Un inconvénient bien connu des générateurs magnétiques est que la variation de leur réaction d'induit, en fonction de la vitesse de rotation, provoque un décalage croissant du point d'allumage dans le sens d'un retard à l'allumage, retard représenté par la courbe A de la figure 2.

Ce retard β, figure 3, est facilement compensable par une adaptation des caractéristiques du mécanisme d'avance centrifuge dans le domaine des vitesses, de rotation du générateur, supérieures à 400 tours/minute, laquelle vitesse correspond, généralement, au point de réglage, PR, de l'allumage sur les véhicules automobiles. Ce point de réglage, PR, représente la valeur de référence du dispositif d'allumage, valeur de référence dans laquelle est comprise la réaction d'induit du générateur, figure 2, courbe B. L'adaptation des caractéristiques du mécanisme d'avance centrifuge consiste en une modification de la force des ressorts de rappel des masses s'écartant par l'effet de la force centrifuge, et par un déplacement de la butée limitant le débattement desdites masses, ce par rapport à un même mécanisme utilisé, par exemple dans un dispositif d'allumage à rupteur mécanique.

Dans le domaine des vitesses inférieures à 400 tours/minute, domaine dans lequel le mécanisme d'avance centrifuge est totalement inopérant, ce qui est le cas pendant la phase de démarrage du moteur à combustion interne, l'emploi d'un générateur magnétique provoque un décalage du point d'allumage dans le sens d'une avance α à l'allumage, figure 3, du fait qu'aux basses vitesses de démarrage, la réaction d'induit du générateur magnétique est pratiquement nulle, alors que la valeur de cette réaction était comprise dans le point de réglage, PR.

Ce décalage dans le sens d'une avance α à l'allumage, présente l'inconvénient que, pendant la phase de démarrage du moteur, à combustion interne, il n'est pas souhaitable que la force des explosions, provoquée en avance par rapport au point mort haut des cylindres, vienne s'opposer à la force produite par le moteur électrique de démarrage du moteur, à combustion interne.

Conformément à la présente invention un condensateur 21 est connecté entre l'extrémité 6a de la résistance 6 et l'entrée 8 du circuit de commande 9, de façon que la variation d'impédance du condensateur 21, variation de forme $Z = 1/_{c\omega}$ compense automatiquement l'avance du point d'allumage provoquée par le générateur magnétique dans le domaine de ses basses vitesses de rotation, c'est à dire dans le domaine des vitesses inférieures à 400 tours/minute.

A titre d'exemple, non limitatif, les résistances 4 et 6 ont une valeur de 62 000 ohms, la résistance 5 à une valeur de 1 000 ohms et la capacité du condensateur 21 est de 0,47 microfarad.

## Revendication

Dispositif électronique de commande d'allumage d'un moteur, à combustion interne, notamment pour véhicules automobiles, dispositif comportant un générateur magnétique (1) constitué d'un rotor (2) et d'un enroulement induit (3) délivrant des signaux alternatifs appliqués, par l'intermédiaire de résistances (4, 5, 6) aux entrées (7, 8) d'un circuit (9) de commande d'un interrupteur électronique (10) commandant le passage d'un courant dans l'enroulement primaire (11) d'une bobine d'allumage (12) pour délivrer une étincelle d'énergie constante, à des bougies d'allumage (15, 16, 17, 18) reliées consécutivement à l'enroulement secondaire (13) de la bobine (12) par un distributeur (14), dispositif caractérisé en ce qu'un condensateur (21) est connecté entre l'extrémité (6a) de la résistance (6) et l'entrée (8) du circuit (9) de façon que la variation d'impédance du condensateur (21) compense l'avance du point d'allumage provoquée par le générateur (1) dans le domaine de ses basses vitesses de rotation.

## Claim

Electronic device for controlling the ignition of an internal-combustion engine, in particular for motor vehicles, the said device comprising a magnetic generator (1) consisting of a rotor (2) and of an armature winding (3) supplying alternating signals which are applied, by means of resistors (4, 5, 6), to inputs (7, 8) of a control circuit (9) of an electronic switch (10) controlling the passage of a current through the primary winding (11) of an ignition coil (12), to supply a spark of constant energy to spark plugs (15, 16, 17, 18) connected consecutively to the secondary winding (13) of the coil (12) by means of a distributor (14), the said device being characterized in that a capacitor (21) is connected between the end (6a) of the resistor (6) and the input (8) of the circuit (9), in such a way that the variation in impedance of the capacitor (21) compensates the advance of the ignition point caused by the generator (1) in the range of its low rotational speeds.

## Patentanspruch

Elektronische Vorrichtung zum Verstellen des Zündzeitpunktes eines Verbrennungsmotors, insbesondere für Kraftfahrzeuge, mit einem von einem Rotor (2) und einer Ankerwicklung (3) gebildeten magnetischen Generator (1), der Wechselspannungssignale erzeugt, welche über Widerstände (4, 5, 6) den Eingängen (7, 8) einer Steuerschaltung (9) eines elektronischen Unterbrechers (10) zugeführt werden, der das Fließen eines Stroms durch die Primärwicklung (11) einer Zündspule (12) steuert, um einen Zündfunken von konstanter Energie an Zündkerzen (15, 16, 17, 18) abzugeben, die von einem Verteiler (14) nacheinander mit der Sekundärwicklung (13) der Spule (12) verbunden werden, dadurch gekennzeichnet, daß zwischen das Ende (6a) des Widerstandes (6) und den Eingang (8) der Schaltung (9) ein Kondensator (21) so zwischengeschaltet ist, daß die Impedanzveränderung des Kondensators (21) die vom Generator (1) in seinem unteren Drehzahlbereich hervorgerufene Vorverstellung des Zündzeitpunktes ausgleicht.

_FIG. 1_

_FIG. 2_

_FIG. 3_